# EUROPEAN PATENT SPECIFICATION

(11) **EP 1 612 482 B1**
(45) Date of publication and mention of the grant of the patent: **04.09.2013**
(21) Application number: 05105969.9
(22) Date of filing: 30.06.2005
(51) Int. Cl.: F23G 5/20, F23G 5/12, F23L 7/00

(54) **Waste disposal apparatus**
Abfallentsorgungvorrichtung
Appareil d'élimination de déchets

(30) Priority: 30.06.2004 IT RM20040324
(43) Date of publication of application: 04.01.2006
(73) Proprietor: CENTRO SVILUPPO MATERIALI S.p.A., 00129 Roma (IT)
(72) Inventor: TODARELLO, Giuseppe Rosario, Via di Castel Romano 100-102, 00129, Roma (IT); PINTI, Medardo, Via di Castel Romano 100-102, 00129, Roma (IT); PISTELLI, Maria Ilaria, Via di Castel Romano 100-102, 00129, Roma (IT)
(74) Representative: Capasso, Olga

(56) References cited:
- EP-A- 0 451 648
- EP-A- 0 544 373
- EP-A- 0 564 365

## Description

### Technical Field

The present invention relates to an apparatus for continuously disposing of waste by means of combustion and gasification.

### Prior Art

For "waste" it is meant any substance or item deriving from human activities or natural cycles, abandoned or intended for abandonment; by convention, waste is generally classified as: Urban, Special, Toxic-Noxious, Hazardous.

In turn, Urban Waste is distinguishable into internal waste and external waste; internal waste comes from dwellings or other civilian settlements (industrial, craft, trade, hospital, offices, etc.) inclusive of that made up by bulky consumer goods of household or common use.

External waste is that lying on public roads and areas or on private roads and areas, anyhow subject to public use, or on sea beaches not subject to specific normative systems.

Special Waste is that deriving from: a) industrial processing and agricultural, craft, trade and service activities; b) hospitals, nursing homes and public and private homes that cannot be likened to urban ones; c) demolitions, building and excavations, deteriorated machineries and apparatuses, out-of-order motor vehicles and parts thereof; d) residues of waste treatment activities or purification.

Toxic and/or Noxious Waste are contaminated in a quantity and/or concentration such as to present a danger to health and environment according to the various laws.

Hazardous Waste comprises, e.g.:
a) cells and batteries;
c) pharmaceutical products.

In Italy, 20 million tons of urban waste are produced yearly. 87.5% of this waste is disposed of in controlled dumps (tips), 6% is treated in energy-recovering combustion plants, 3.3% is sent to composting and 3.1% is recovered in the form of reusable matter like glass, paper, plastics.

Provisions of the law of some Countries mandate that only inert waste, waste singled out by specific technical standards and residual waste from recycling, recovery and disposal operations may be disposed of in a dump.

In Italy, dumps are generally classified into the following categories:
- inert waste dump;
- non-hazardous waste dump, where urban waste and non-hazardous waste of any other origin are admissible;
- hazardous waste dump, where stable and non-reactive hazardous waste is admissible.

Criteria for admitting waste to the dump become more binding over time.

Previously licensed dumps can continue to receive waste for which they have been authorized, however they should submit an adjustment plan to the competent authority.

Waste collection and treatment experiences in some Countries, among which Italy, appear extremely diversified, conducted according to different methodologies, with different efficiency rates and hardly comparable.

Causes of difficulty may be linked to the lack of planning and programming of interventions, the absence of effective instruments of legislative and financial support, the adoption of inadequate technical methodologies of collection, the insufficiency of stocking and waste-to-energy facilities and above all the lack of "design".

Hence, the problem of the disposal of waste, in particular of urban solid waste, is of increasing importance from the economic and environmental viewpoint for several Countries.

To date, the most inexpensive and therefore most widely adopted methodology is that of the controlled dump; however, singling out suitable sites and sending thereto materials suitable to be treated and therefore accepted thereby is increasingly difficult. Accordingly, new plants for the singling out, the selecting, the treating and the reusing of waste are being studied and developed.

Numerous known patent documents have attempted to provide solutions for solving the problem of waste disposal.

Among them, the document US 3827379 describes a rotary kiln for the treatment of solid waste using a strong injection of air to stir the atmosphere within the kiln and assure an uniform oxygen distribution and therefore an efficient combustion.

The document US 4993331 instead describes a rotary kiln for the treatment of waste in which pellets are dried by hot air in a dryer and then are introduced in the kiln in which pyrolysis takes place.

A third document, US 5086716, describes a rotary kiln for the treatment of waste in which the latter, prearranged in sealable containers, is propelled into the kiln by an air cannon according to a trajectory generally parallel to the axis of the kiln, inside which the temperature progressively increases from the inlet section to the outlet section.

The document EPO 451 849 describes a waste disposal apparatus according to the preamble of claim 1.

The numerous solutions advanced and known by the prior art in the specific field of waste disposal and inertization are not capable of assuring reduced operative times, continuous operativeness, low noxious emissions (such as NOₓ), high flexibility, simplicity of construction and compactedness of the apparatus.

### Disclosure of Invention

A primary object of the present invention is to provide a waste disposal apparatus having flexibility, simplicity of construction and compactedness allowing to operate continuously in reduced times.

A further object is to obtain by such an apparatus, in a setup of combustion and/or of gasification, low noxious emissions, such as NOₓ, and the removal of sulfides and ashes in the form of slag, reusable, e.g., as road material.

Therefore, the present invention proposes to solve the problems highlighted above, providing a waste disposal apparatus which has the characteristics of claim 1.

The apparatus according to the present invention provides means for inserting the material to be treated, typically solid waste, into a substantially cylindrical chamber, apt to rotate, and sections for outletting the resulting solid material, or slag, and of the resulting gaseous material, or fumes.

The apparatus also provides a system for the management and the use of an auxiliary fuel, such as methane. The auxiliary fuel is necessary during the starting phase of the process, the preheating; subsequently the required energy is provided by the same waste transformation.

Into the chamber it is radially injected, tangentially deflected therein by means of suitable baffles, the combustion supporter, such as air and oxygen, even jointly; its quantity depends on the setup of the desired combustion or gasification process. Also the operating temperature of the process under working conditions will depend on such a setup.

To inject the combustion supporter into the chamber, a first set of nozzles for injecting oxygen and a second set of nozzles for injecting air are present. The sets of nozzles are positioned at the outer skirt of the chamber.

In operation under working conditions the material to be treated, along with the suitably metered combustion supporter, is introduced in the chamber while the latter is in rotation.

The proposed apparatus allows a suitable handling of the material to be treated so as to foster the feed of the still unreacted solid material as well as of the slag, i.e. the solid product of the process, to an outlet section.

Advantageously, the presence of means for deflecting the injected combustion supporter, at the inner skirt of the chamber allows an intimate contact between solid waste and combustion supporter, thereby fostering the combustion/gasification process.

Moreover, a suitable geometry of such baffles avoids the occlusion of the nozzles for inletting combustion supporter.

The optimal mixing between waste and combustion supporter thus achieved, in a setup of combustion as well as in one of gasification, allows high transfers of matter and energy and therefore an overall efficiency of the process. All this is achieved also thanks to the fluidifying effect of the combustion supporter.

The dependent claims describe preferred embodiments of the invention.

### Brief description of the Figures.

Further characteristics and advantages of the invention shall become more readily apparent in light of the detailed description of a preferred, but not exclusive, embodiment of a waste disposal apparatus illustrated, provided purely by way of a non limiting example, with the aid of the accompanying drawing tables in which:
Fig. 1 shows a longitudinal section of the apparatus according to the present invention;
Fig. 2 shows a cross section of the apparatus according to the present invention.

### Detailed description of an illustrative embodiment

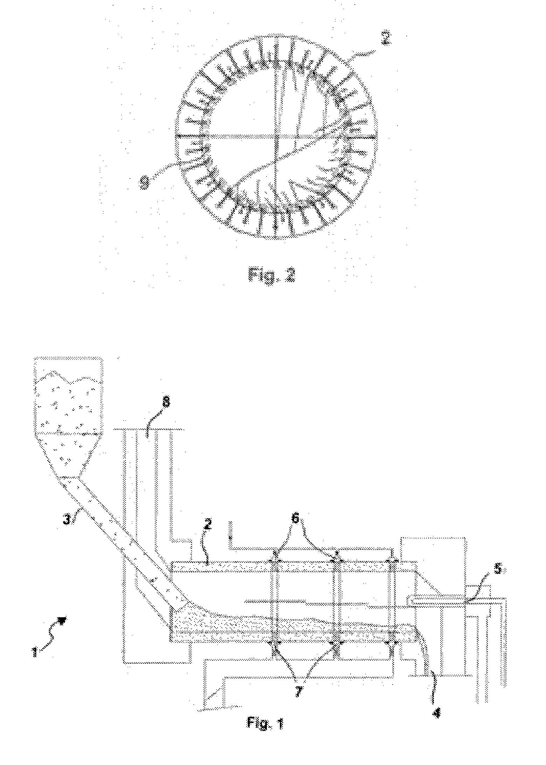

With reference to Fig. 1, a waste disposal apparatus is shown, generally indicated by reference 1, comprising: a substantially cylindrical chamber 2, apt to rotate about its own substantially horizontal longitudinal axis of symmetry;
means 3 for inserting into said chamber 2 the material to be treated;
a first section 4 for outletting inert solid material or slag, and a second section 8 for outletting gaseous material or fumes of the process;
means for injecting auxiliary fuel, such as methane, comprising a pilot burner 5;
means for injecting combustion supporter, such as oxygen and/or air.

The means for injecting combustion supporter into the chamber 2 comprises a first set of nozzles 6 for injecting oxygen and a second set of nozzles 7 for injecting air. The sets of nozzles 6, 7 are positioned at the outer skirt of the chamber 2.

The apparatus also provides a system for the management and the use of an auxiliary fuel, such as methane. The auxiliary fuel is necessary during the starting phase of the process, the pre-heating; subsequently the required energy is provided by the same waste transformation.

Into the chamber it is radially injected, tangentially deflected therein by suitable baffles 9, the combustion supporter, such as air and oxygen, even jointly; its quantity depends on the setup of the desired combustion or gasification process.

Also the operating temperature of the process under working conditions depends on such a setup. In case of gasification or combustion in lack of combustion supporter, the expected temperatures of the process are of the order of 600-900°C; whilst, in case of combustion, the process temperatures are of the order of 1000-1100°C in case the combustion supporter is air, reaching up to 1600°C in case the combustion supporter is constituted by a mixture of air and oxygen or by pure oxygen.

In a combustion setup, when the temperature inside the chamber reaches about 800-900°C, the pilot burner 5 running on auxiliary fuel, e.g. methane, is turned off and the process temperature stabilizes following the combustion started at a temperature of about 1100-1600°C according to the typology of combustion supporter used.

In a gasification setup, or in a setup of combustion in lack of combustion supporter, the temperature is stabilized at values typically lower, 600-900°C. In this case as well, the pilot burner 5 running on auxiliary fuel is turned off once the process temperature stabilizes at about 600-900°C, according to the typology of combustion supporter used, following the started gasification or the feeding of the waste with the suitable quantity of combustion supporter.

The inner walls of the chamber 2 in which the process takes place are constituted by artefacts of refractory material and different typology, depending on the regions with various temperature in which the chamber 2 is subdivided.

Moreover, advantageously there are provided optical inspection systems and systems for controlling the temperature, such as thermocouples and/or pyrometers.

In operation under working conditions the material to be treated, typically solid waste, along with the suitably metered combustion supporter, is introduced in the chamber 2 while the latter is in rotation.

The proposed apparatus allows a suitable handling of the material to be treated so as to foster the feed of the still unreacted solid material as well as of the slag, i.e. the solid product of the reaction, to the outlet section 4.

Advantageously, the presence of means 9 for deflecting the injected combustion supporter, at the inner skirt of the chamber 2, allows an intimate contact between solid waste and combustion supporter, thereby fostering the combustion/gasification process.

Moreover, a suitable geometry of such baffles 9 avoids the occlusion of the nozzles 6, 7 for inletting the combustion supporter.

The baffles 9 cover the inner skirt of the chamber 2 substantially along the entire length thereof. They suitably have a surface that is substantially L-shaped, when viewed in a section on a plane orthogonal to the axis of rotation of the cylindrical chamber 2, with the base folded toward the direction opposite to the sense of rotation of the latter. Other embodiments of such baffles are possible, differing from the L-shaped ones, e.g. C-shaped, J-shaped, etc., performing the two functions of increasing the mixing effect produced by the rotation of the chamber 2 and of protecting the nozzles for the combustion supporter from occlusion by waste.

What has been mentioned in the foregoing provides an optimal mixing between waste and combustion supporter, in a combustion setup as well as in a gasification one, allowing high transfers of matter and energy and therefore an overall efficiency of the process. All this is achieved also thanks to the fluidifying effect of the combustion supporter.

The still unburned, or still ungasified in case of a gasification setup, solid particles continue reacting until oxygen is available; subsequently, if light-weight they end up in the stream of exhausted gases or flying ashes, otherwise are driven to the walls of the chamber 2 making up slag, which may be molten depending on the process temperature.

The slag formed on the inner walls of refractory material solidifies, also thanks to the presence of a cooling system, and starts flowing to the outlet section 4, taking into account even the fact that the longitudinal axis of the chamber 2 is suitably inclined with respect to the horizontal.

The slag produced may subsequently be disposed of in a dump or advantageously reused, e.g. as road subgrade or to make bituminous mixes.

The gases or fumes produced may be devoted, depending on the process, to two different uses:
- to a post-combustion chamber and to a conventional system for treating fumes, with possible recovery of sensible heat, in case of waste combustion setup;
- to a system for cleaning the synthesis gas produced, in case of waste gasification setup; the synthesis gas produced is essentially constituted, depending on the temperature, by a mixture of hydrogen, carbon oxide and light hydrocarbons such as gas, along with solids mainly constituted by carbon particulate or carbon black and complex families of heavy hydrocarbons, such as oils and tar, denominated TAR.

The apparatus, subject-matter of the invention, is suitably dimensioned in such a way that:
- the ratio between diameter of the outlet sections 4, 8 and diameter of the base of the cylindrical chamber (2) ranges from 0.2 to 0.5;
- the ratio between length and diameter of the base of the cylindrical chamber (2) ranges from 3 to 5.

The flow rates characterizing the apparatus of the invention are advantageously the following:
- the flow rate of waste inserted into the chamber (2) ranges from 1.5 to 3 tons/h.
- the flow rate of auxiliary fuel injected into the chamber (2) ranges from 50 to 150 Nm³/h.
- the flow rate of combustion supporter injected into the chamber (2) ranges from 50 to 500 Nm³/h .
- the flow rate of the fumes exiting the chamber (2) ranges from 300 to 10000 Nm³/h.

The internal pressure of the chamber 2 ranges from 0 to 10 mbar.

Lastly, under working conditions, the mean stay time inside the chamber (2) of the waste particles ranges from 10 and 60 min.

In an advantageous variant, the means 3 for inserting the waste comprises at least one gravity system and the waste in inserted into the chamber 2 in a <100 mm size.

The following examples are aimed at making better understood the aims, characteristics, advantages and operation modes of the apparatus of the invention.

Example 1 was made with the apparatus of the invention in combustion setup, using FFW (Fuel-From-Waste) waste as material to be treated.

Example 2 was instead made with the apparatus in gasification setup using solid urban waste as material to be treated.

For both examples, hereinafter three tables are reported; the first one shows the size in mm of the waste and the inlet flow rates of waste, auxiliary fuel and combustion supporters; the second one shows the operating parameters of the disposal process and the geometrical parameters of the apparatus used; and the third one shows the outlet flow rates of slag and fumes.

### Example 1

Treated material: FFW (Fuel-From-Waste) waste

### Apparatus in combustion setup

### Inlet

| | |
|---|---|
| Waste flow rate | 2.5 tons/h |
| Waste size | < 35 mm |
| Auxiliary fuel flow rate (Methane at the starting phase) | 100 Nm³/h |
| Combustion supporter (air) flow rate | 6300 Nm³/h |
| Combustion supporter (oxygen) flow rate | 400 Nm³/h |

### Operating and Geometrical Parameters

| | |
|---|---|
| Process temperature | 1000 °C |
| Stay time | 30 min |
| Pressure | 7 mbar |
| L/D | 4 |
| od1/D | 0.3 |
| od2/D | 0.3 |

where:
L = cylindrical chamber length
D = diameter of the base of cylindrical chamber 2
od1 = diameter of fume outlet section 8
od2 = diameter of slag outlet section 4

### Outlet

| | |
|---|---|
| Slag flow rate | 500 Kg/h |
| Fumes flow rate | 8000 Nm³/h |

### Example 2

Treated material: USW waste (Urban Solid Waste)

### Apparatus in combustion setup

### Inlet

| | |
|---|---|
| Waste flow rate | 2 tons/h |
| Waste size | < 25 mm |
| Auxiliary fuel flow rate (Methane at the starting phase) | 100 Nm³/h |
| Combustion supporter (air) flow rate | 500 Nm³/h |
| Combustion supporter (oxygen) flow rate | 500 Nm³/h |

### Operating and Geometrical Parameters

| | |
|---|---|
| Process temperature | 800°C |
| Stay time | 40 min |
| Pressure | 4 mbar |
| L/D | 4 |
| od1/D | 0.3 |
| od2/D | 0.3 |

where:
L = cylindrical chamber length
D = diameter of the base of cylindrical chamber 2
od1 = diameter of fume outlet section 8
od2 = diameter of slag outlet section 4

### Outlet

| | |
|---|---|
| Slag flow rate | 300 Kg/h |
| Fumes flow rate | 3500 Nm³/h |

The specific embodiments described hereto do not limit the content of this application, encompassing all variants of the invention defined by the claims.

## Claims

1. A waste disposal apparatus (1), comprising: a substantially cylindrical chamber (2) apt to rotate about its own substantially horizontal longitudinal axis of symmetry, means (3) for inserting waste into said chamber (2), a first section (4) for outletting inert solid material and a second section (8) for outletting gaseous material, means for injecting fuel into said chamber (2), means for injecting combustion supporter in said chamber (2), **characterized in that**
said means for injecting combustion supporter into said chamber (2) comprises a first set of nozzles (6) for injecting oxygen and a second set of nozzles (7) for injecting air, said first and said second set of nozzles being positioned at the outer skirt of the chamber (2) and apt to inject the combustion supporter internally to said chamber (2),
and **in that** it comprises means (9) for deflecting the injected combustion supporter positioned at the inner skirt of the chamber (2).

2. The apparatus according to claim 1, wherein said means for injecting combustion supporter into said chamber (2) is apt to cause an injection of said combustion supporter in a direction substantially radial with respect to the longitudinal axis of symmetry of the chamber (2).

3. The apparatus according to claim 2, wherein said means for injecting combustion supporter is arranged symmetrically with respect to the longitudinal axis of symmetry of said chamber (2).

4. The apparatus according to claim 1, wherein said means (9) for deflecting injected combustion supporter, positioned at the inner skirt of the chamber (2), is apt to cover said inner skirt substantially along the entire axial length thereof.

5. The apparatus according to claim 4, wherein said means (9) for deflecting the injected combustion supporter is apt to deflect the flow of said combustion supporter tangentially with respect to any one radius of said chamber (2).

6. The apparatus according to claim 5, wherein said means (9) for deflecting the injected combustion supporter have a sectional shape, on a plane orthogonal to the longitudinal axis of symmetry of the chamber (2), substantially L-shaped with the base folded toward the direction opposite to the sense of rotation of the latter.

7. The apparatus according to claim 1, wherein said means for injecting fuel, such as methane, comprises at least one burner (5).

8. The apparatus according to claim 1, wherein said means (3) for inserting waste comprises at least one gravity system.

9. The apparatus according to claim 1, wherein the ratio between diameter of the section 8 for outletting gaseous material and diameter of the base of the chamber (2) ranges from 0.2 to 0.5.

10. The apparatus according to claim 1, wherein the ratio between length and diameter of the base of the chamber (2) ranges from 3 to 5.

11. The apparatus according to claim 1, wherein the waste is inserted in a <100 mm size.

12. The apparatus according to claim 1, wherein the flow rate of waste inserted into the chamber (2) ranges from 1.5 to 3 t/h.

13. The apparatus according to claim 1, wherein the flow rate of fuel injected into the chamber (2) ranges from 50 to 150 Nm³/h.

14. The apparatus according to claim 1, wherein the flow rate of combustion supporter injected into the chamber (2) ranges from 300 to 10000 Nm³/h.

15. The apparatus according to claim 1, wherein the flow rate of the gaseous material exiting the chamber (2) ranges from 3000 to 10000 Nm³/h.

16. The apparatus according to any one of the preceding claims, wherein, under working conditions, the temperature inside the chamber (2) ranges from 700 to 1500 °C.

17. The apparatus according to any one of the preceding claims, wherein, under working conditions, the mean stay time inside the chamber (2) of the waste particles ranges from 10 to 60 min.

18. The apparatus according to any one of the preceding claims, wherein the internal pressure of the chamber (2) ranges from 0 to 10 mbar.

## Patentansprüche

1. Abfallentsorgungsvorrichtung (1), Folgendes umfassend: eine im Wesentlichen zylindrische Kammer (2), die geeignet ist, sich um ihre im Wesentlichen horizontale längsgerichtete Symmetrieachse zu drehen, ein Mittel (3) zum Einführen von Abfall in die Kammer (2), einen ersten Abschnitt (4) zum Ablassen inerten festen Materials und einen zweiten Abschnitt (8) zum Ablassen gasförmigen Materials, ein Mittel zum Einspritzen von Brennstoff in die Kammer (2) sowie ein Mittel zum Einblasen von Verbrennungsförderer in die Kammer (2), **dadurch gekennzeichnet, dass**
das Mittel zum Einblasen von Verbrennungsförderer in die Kammer (2) einen ersten Satz Düsen (6) zum Einblasen von Sauerstoff und einen zweiten Satz Düsen (7) zum Einblasen von Luft umfasst, wobei der erste und der zweite Satz Düsen an der äußeren Einfassung der Kammer (2) angeordnet und dazu geeignet sind, den Verbrennungsförderer in das Innere der Kammer (2) einzublasen,
und dadurch, dass die Vorrichtung ein Mittel (9) zum Umlenken des eingeblasenen Verbrennungsförderers an der inneren Einfassung der Kammer (2) umfasst.

2. Vorrichtung nach Anspruch 1, wobei das Mittel zum Einblasen von Verbrennungsförderer in die Kammer (2) dazu geeignet ist, ein Einblasen des Verbrennungsförderers in einer Richtung zu bewirken, die in Bezug zur längsgerichteten Symmetrieachse der Kammer (2) im Wesentlichen radial ist.

3. Vorrichtung nach Anspruch 2, wobei das Mittel zum Einblasen von Verbrennungsförderer in Bezug zur längsgerichteten Symmetrieachse der Kammer (2) im Wesentlichen symmetrisch angeordnet ist.

4. Vorrichtung nach Anspruch 1, wobei das Mittel (9) zum Umlenken eingeblasenen Verbrennungsförderers, das an der inneren Einfassung der Kammer (2) angeordnet ist, dazu geeignet ist, die innere Einfassung im Wesentlichen über deren gesamte axiale Länge zu bedecken.

5. Vorrichtung nach Anspruch 4, wobei das Mittel (9) zum Umlenken eingeblasenen Verbrennungsförderers dazu geeignet ist, den Strom des Verbrennungsförderers in Bezug zu einem beliebigen Radius der Kammer (2) tangential umzulenken.

6. Vorrichtung nach Anspruch 5, wobei das Mittel (9) zum Umlenken eingeblasenen Verbrennungsförderers eine Querschnittsform aufweist, die auf einer Ebene rechtwinklig zur längsgerichteten Symmetrieachse der Kammer (2) im Wesentlichen L-förmig ist, wobei ihre Basis entgegen der Rotationsrichtung der Kammer abgekantet ist.

7. Vorrichtung nach Anspruch 1, wobei das Mittel zum Einspritzen von Brennstoff, wie beispielsweise Methan, mindestens einen Brenner (5) umfasst.

8. Vorrichtung nach Anspruch 1, wobei das Mittel (3) zum Einführen von Abfall mindestens ein Schwerkraftsystem umfasst.

9. Vorrichtung nach Anspruch 1, wobei das Verhältnis zwischen dem Durchmesser des Abschnittes (8) zum Ablassen gasförmigen Materials und der Durchmesser der Basis der Kammer (2) im Bereich zwischen 0,2 und 0,5 liegt.

10. Vorrichtung nach Anspruch 1, wobei das Verhältnis zwischen der Länge und dem Durchmesser der Basis der Kammer (2) im Bereich von 3 bis 5 liegt.

11. Vorrichtung nach Anspruch 1, wobei der Abfall in einer Größe <100 mm eingeführt wird.

12. Vorrichtung nach Anspruch 1, wobei der Volumenstrom des in die Kammer (2) eingeführten Abfalls im Bereich von 1,5 bis 3 t/h liegt.

13. Vorrichtung nach Anspruch 1, wobei der Volumenstrom des in die Kammer (2) eingespritzten Brennstoffs im Bereich von 50 bis 150 Nm³/h liegt.

14. Vorrichtung nach Anspruch 1, wobei der Volumenstrom des in die Kammer (2) eingeblasenen Verbrennungsförderers im Bereich von 300 bis 10.000 Nm³/h liegt.

15. Vorrichtung nach Anspruch 1, wobei der Volumenstrom des die Kammer (2) verlassenden gasförmigen Materials im Bereich von 3000 bis 10.000 Nm³/h liegt.

16. Vorrichtung nach einem der vorhergehenden Ansprüche, wobei die Temperatur im Inneren der Klammer (2) unter Arbeitsbedingungen im Bereich zwischen 700 und 1500 °C liegt.

17. Vorrichtung nach einem der vorhergehenden Ansprüche, wobei die mittlere Verweilzeit der Abfallpartikeln im Inneren der Kammer (2) unter Arbeitsbedingungen im Bereich von 10 bis 60 min liegt.

18. Vorrichtung nach einem der vorhergehenden Ansprüche, wobei der Innendruck in der Kammer (2) im Bereich von 0 bis 10 mbar liegt.

## Revendications

1. Appareil d'élimination de déchets (1), comprenant : une chambre essentiellement cylindrique (2) apte à pivoter sur son axe de symétrie longitudinal essentiellement horizontal (3) pour insérer de l'eau dans ladite chambre (2), une première section (4) pour faire sortir de la matière inerte solide et une seconde section (8) pour faire sortir une matière gazeuse, un moyen pour injecter du combustible dans ladite chambre (2), un moyen pour injecter un support de combustion dans ladite chambre (2), **caractérisée en ce que**
ledit moyen pour injecter un support de combustion dans ladite chambre (2) comprend un premier ensemble de tuyères (6) pour l'injection d'oxygène et un second ensemble de tuyères (7) pour injecter de l'air, lesdits premier et second ensembles de tuyères étant positionnés sur la jupe extérieure de la chambre (2) et aptes à injecter le support de combustion de manière interne à ladite chambre (2),
et **en ce qu'**elle comprend un moyen (9) pour dévier le support de combustion injecté placé sur la jupe intérieure de la chambre (2).

2. Appareil selon la revendication 1, où ledit moyen d'injection du support de combustion dans ladite chambre (2) est apte à entraîner une injection dudit support de combustion dans une direction essentiellement radiale par rapport à l'axe longitudinal de symétrie de la chambre (2).

3. Appareil selon la revendication 2, où ledit moyen d'injection du support de combustion est disposé symétriquement par rapport à l'axe longitudinal de symétrie de ladite chambre (2).

4. Appareil selon la revendication 1, où ledit moyen (9) pour dévier le support de combustion injecté, placé sur la jupe intérieure de la chambre (2), est apte à couvrir ladite jupe intérieure essentiellement le long de toute la longueur axiale de celle-ci.

5. Appareil selon la revendication 4, où ledit moyen (9) pour dévier le support de combustion injecté est apte à dévier le flux dudit support de combustion de manière tangentielle par rapport à un rayon quelconque de ladite chambre (2).

6. Appareil selon la revendication 5, où ledit moyen (9) pour dévier le support de combustion injecté a une forme transversale, sur un plan orthogonal à l'axe longitudinal de symétrie de la chambre (2), essentiellement en forme de L avec la base repliée dans le sens opposé au sens de rotation de cette dernière.

7. Appareil selon la revendication 1, où ledit moyen pour injecter du combustible, tel que du méthane, comprend au moins un brûleur (5).

8. Appareil selon la revendication 1, où ledit moyen (3) pour insérer de l'eau comprend au moins un système à gravité.

9. Appareil selon la revendication 1, où le rapport entre le diamètre de la section 8 pour laisser sortir la matière gazeuse et le diamètre de base de la chambre (2) va de 0,2 à 0,5.

10. Appareil selon la revendication 1, où le rapport entre la longueur et le diamètre de la base de la chambre (2) va de 3 à 5.

11. Appareil selon la revendication 1, où les déchets sont insérés dans une dimension < 100 mm.

12. Appareil selon la revendication 1, où le débit de déchets insérés dans la chambre (2) va de 1,5 à 3 t/h.

13. Appareil selon la revendication 1, où le débit de combustible injecté dans la chambre (2) va de 50 to 150 Nm³/h.

14. Appareil selon la revendication 1, où le débit du support de combustion injecté dans la chambre (2) va de 300 to 10000 Nm³/h.

15. Appareil selon la revendication 1, où le débit de la matière gazeuse sortant de la chambre (2) va de 3000 to 10000 Nm³/h.

16. Appareil selon l'une quelconque des revendications précédentes, où, sous des conditions de fonctionnement, la température à l'intérieur de la chambre (2) va de 700 à 1500° C.

17. Appareil selon l'une quelconque des revendications précédentes, où, sous des conditions de fonctionnement, le temps de séjour moyen à l'intérieur de la chambre (2) des particules de déchets va de 10 à 60 min.

18. Appareil selon l'une quelconque des revendications précédentes, où la pression interne de la chambre (2) va de 0 à 10 mbar.
